# EUROPEAN PATENT APPLICATION

(11) **EP 3 550 216 A2**
(43) Date of publication of application: **09.10.2019**
(21) Application number: 19167616.2
(22) Date of filing: 05.04.2019
(51) Int. Cl.: F24F 11/62, F24F 11/49, G05B 17/00, F24F 140/40, F24F 140/60, F24F 140/50, F24F 11/64

(54) **DEVICE FOR EVALUATING AIR-CONDITIONER PERFORMANCE BASED ON CLIMATE SIMULATION AND METHOD THEREOF**

(30) Priority: 06.04.2018 KR 20180040183
(71) Applicant: LG Electronics Inc., 07336 SEOUL (KR)
(72) Inventor: PARK, Noma, 08592 Seoul (KR); KIM, Sunghwan, 08592 Seoul (KR); SONG, Joonkeol, 08592 Seoul (KR); CHOI, Changmin, 08592 Seoul (KR); KWON, Hyukmin, 08592 Seoul (KR); JO, Ikhee, 08592 Seoul (KR); JIN, Jaewoo, 08592 Seoul (KR)
(74) Representative: Vossius & Partner Patentanwälte Rechtsanwälte mbB

(57) **Abstract**

Disclosed are a device for evaluating performance of an air conditioner based on climate simulation and a method thereof. The device for evaluating performance of an air conditioner based on climate simulation and the method thereof may supply load to one or more sub-chambers that simulates climate of a selected region, may calculate energy consumption of an air conditioner by applying changes in temperature and humidity supplied by the sub-chambers, and may evaluate energy consumption of the air conditioner that operates in the region with specific climate.

## Description

The present disclosure relates to a device for evaluating performance of an air conditioner based on climate simulation and a method thereof.

An air conditioner (or an air conditioning device) is a device that may discharge cool-temperature air, adjust indoor temperature, and clean indoor air to provide a clean and pleasant environment for people.

In general, the air conditioner includes an indoor unit that is placed indoors and an outdoor unit that consists of a compressor, a heat exchanger, and the like and that supplies refrigerants to the indoor unit.

The indoor unit and outdoor unit may be separately controlled. In the air conditioner, one or more indoor units may connect to the outdoor unit. The outdoor unit supplies refrigerants to the indoor unit based on a requested operation state. Accordingly, the air conditioner operates in heating mode or cooling mode.

In the process of manufacturing air conditioners, their performance such as cooling or heating capacity may be tested in a variety states. However, they are manufactured in specific regions. Thus, it is difficult to test their performance. Performance of air conditioners may be exactly tested on the basis of target climate or target regions. Additionally, their performance may improve, using the test results. Thus, a system for testing performance of air conditioners in various environments and a method for evaluating their performance are required.

To solve the problems, in some embodiments, a device for evaluating performance of an air conditioner and a method thereof may be commensurate with reality.

The present disclosure provides a device for evaluating performance of an air conditioner and a method thereof, which may simulate climate of a place in which an air conditioner is installed and may directly calculate and supply cooling load or heating load, to evaluate performance of an air conditioner.

The present disclosure provides a device for evaluating performance of an air conditioner and a method thereof, which may simulate climate of each city on the basis of information in a database on climate to evaluate annual operation performance of an air conditioner.

Objectives of the present disclosure are not limited to what has been described. Additionally, other objectives and advantages that have not been mentioned may be understood from the following description and may be more clearly understood from embodiments. Further, it will be understood that the objectives and advantages of the present disclosure may be realized via means and a combination thereof that are described in the appended claims.

Embodiments disclosed herein provides a control device for evaluating performance of an air conditioner and a method thereof, which may supply load to one or more sub-chambers that simulates climate of a selected region, may calculate energy consumption of an air conditioner by applying changes in temperature and humidity supplied by the sub-chambers, and may evaluate energy consumption of the air conditioner that operates in the region with specific climate.

Embodiments disclosed herein provides a control device for evaluating performance of an air conditioner and a method thereof, which may confirm whether load having been supplied to the sub-chamber corresponds to climate of a region to be simulated and may control heat sources to additionally supply load.

Embodiments disclosed herein provides a control device for evaluating performance of an air conditioner and a method thereof, which may select two or more regions with similar climate on the basis of a database on climate and may allocate the two or more regions to each of the sub-chambers in the order of supplying hot air or cool air that is supplied by the heat sources.

Embodiments disclosed herein provides a monitoring device for evaluating performance of an air conditioner based on climate simulation, which may supply heating load or cooling load supplied from heat sources to the sub-chamber and deliver information on changes in the sub-chamber to the control device.

The present disclosure has the advantage of improving performance of an air conditioner based on the method for evaluating performance of an air conditioner, which is commensurate with reality.

The present disclosure has the advantage of evaluating performance of an air conditioner by directly supplying heating or cooling load to the sub-chamber that simulates climate of a place in which the air conditioner is installed, thereby making it possible to improve performance of an air conditioner that is actually sold in the market.

The present disclosure has the advantage of evaluating performance of an air conditioner by supplying a certain level of load on the basis of a database on climate of each city, thereby making it possible to evaluate annual operation performance.

Effects of the present disclosure are not limited to what has been mentioned. Additionally, various effects of the disclosure may be readily drawn by one having ordinary skill in the art from configurations of the present disclosure.

### BRIEF DESCRIPTION OF THE DRWAINGS

FIG. 1 shows a configuration of a chamber according to an embodiment.
FIG. 2 shows the sub-chamber according to an embodiment in FIG. 1.
FIG. 3 shows a configuration of a heat source that supplies cool air and hot air to a sub-chamber according to an embodiment.
FIG. 4 shows a configuration of a control device that controls a sub-chamber according to an embodiment.
FIG. 5 shows a process during which a control device according to an embodiment operates.
FIGS. 6 and 7 show a load simulation and load model according to an embodiment.
FIG. 8 shows a control device according to an embodiment that selects a city to which climate simulation is applied and that controls a chamber.
FIG. 9 shows a process during which a control device according to an embodiment controls load that is supplied to a sub-chamber.
FIG. 10 shows a configuration of a monitoring device that is provided in a sub-chamber according to an embodiment.
FIGS. 11 and 12 show a process of climate simulation in a compact manner using categorized annual data based on a predetermined time period.
FIG. 13 shows results of reproducing annual load through analysis of a load pattern according to an embodiment.
FIG. 14 shows accuracy of annual load on the basis of representative days according to an embodiment.
FIG. 15 shows a process during which performance of an air conditioner according to an embodiment is evaluated.

### DETAILED DESCRIPTION

Hereinafter, embodiments of the present disclosure will be described in detail with reference to the drawings so that those skilled in the art to which the present disclosure pertains can easily implement the present disclosure. The present disclosure may be implemented in many different manners and is not limited to the embodiments described herein.

In order to clearly illustrate the present disclosure, technical explanation that is not directly related to the present disclosure may be omitted, and same or similar components are denoted by a same reference numeral throughout the specification. Further, some embodiments of the present disclosure will be described in detail with reference to the drawings. In adding reference numerals to components of each drawing, the same components may have the same reference numeral as possible even if they are displayed on different drawings. Further, in describing the present disclosure, a detailed description of related known configurations and functions will be omitted when it is determined that it may obscure the gist of the present disclosure.

In describing components of the present disclosure, it is possible to use the terms such as first, second, A, B, (a), and (b), etc. These terms are only intended to distinguish a component from another component, and a nature, an order, a sequence, or the number of the corresponding components is not limited by that term. When a component is described as being "connected," "coupled" or "connected" to another component, the component may be directly connected or able to be connected to the other component; however, it is also to be understood that an additional component may be "interposed" between the two components, or the two components may be "connected," "coupled" or "connected" through an additional component.

Further, with respect to embodiments of the present disclosure, for convenience of explanation, the present disclosure may be described by subdividing an individual component, but the components of the present disclosure may be implemented within a device or a module, or a component of the present disclosure may be implemented by being divided into a plurality of devices or modules.

In this specification, elements that constitute an air conditioner are categorized into an outdoor unit and an indoor unit. A single air conditioning system consists of one or more of outdoor units and one or more of indoor units. A relationship between the outdoor unit and the indoor unit may be 1 : 1, 1 : N, or M : 1.

In this specification, a performance evaluation system for testing performance of an air conditioner includes a chamber that includes one or more partitioned spaces, and a load supplying device that supplies cooling load or heating load to the chamber to change an environment of the chamber. Additionally, the performance evaluation system includes a load-simulation control device that controls the load supplying device such that, when specific climate, or a specific city, a specific area, specific time, and the like is input, the load supplying device generates load on the basis of the climate, or the city, the area, the time, and the like. The load-simulation control device may be a computer, a laptop, and the like, and may be integrated into the performance evaluation system or may be coupled to a communication module of the performance evaluation system.

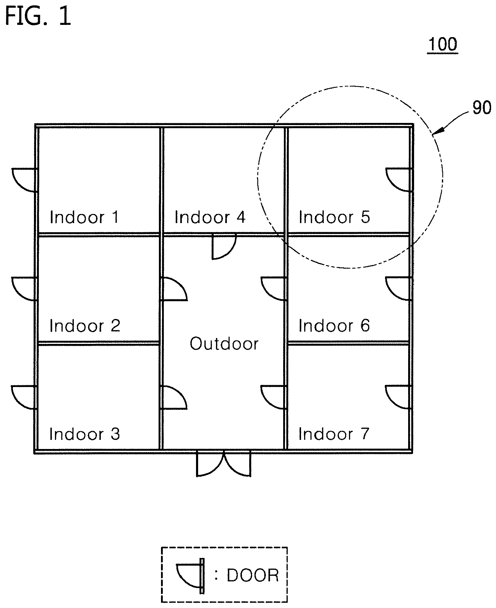

FIG. 1 shows a configuration of a chamber according to an embodiment. The chamber 100 may be partitioned into a plurality of subspaces. Each space may simulate specific climate or a specific area. In FIG. 1, the subspace is referred to as a sub-chamber. The sub-chamber may be divided into an outdoor sub-chamber in which an outdoor unit of a product to be tested is installed, and an indoor sub-chamber in which an indoor unit of a product to be tested is installed.

In FIG. 1, the outdoor sub-chamber is expressed as "OUTDOOR", and a plurality of indoor sub-chambers are expressed as "INDOOR" and numerals. The outdoor sub-chamber is supplied with scheduled temperature and humidity from the load-simulation control device. The indoor sub-chambers are supplied with cooling load and heating load that are scheduled for each indoor sub-chamber.

Each sub-chamber includes a measuring unit that measures temperature and humidity therein. The load-simulation control device may store information on measured temperature and humidity.

Performance such as cooling/heating capacity, electricity consumption, and the like of a product that automatically operates based on set temperature/humidity may be automatically measured in each sub-chamber in real time, and an evaluation of annual operation performance may be converted and calculated from results of automatically operating the product for 6 to 12 days on the basis of an accelerated annual operation schedule that is drawn up beforehand in the control device.

In FIG. 1, the indoor sub-chambers that contact the outdoor sub-chamber may have a door through which air in the outdoor sub-chamber may pass. Additionally, each indoor sub-chamber may optionally have a door that connects with the outside of the chamber.

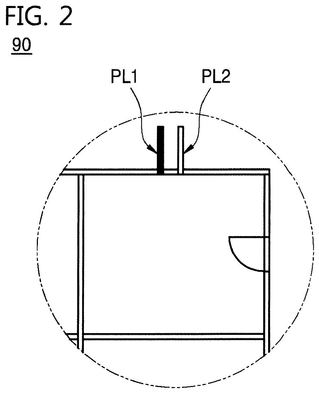

FIG. 2 is an enlarged view illustrating the sub-chamber according to an embodiment in FIG. 1. Load (load for cooling or heating) supplied by the load supplying device is supplied to one lateral surface of the sub-chamber through predetermined pipe lines (PL1, PL2). Pipe line PL1 supplies cool air or cool water that generates cool air in the chamber while pipe line PL2 supplies hot air or hot water that generates hot air in the chamber.

Pipelines PL1 and PL2 may optionally include a load supplying unit (e.g., valve). Accordingly, even when the same load of cooling air or hot air is supplied to all the sub-chambers, the load supplying unit may be controlled such that different load of cooling or heating can be supplied to each sub-chamber. Additionally, the load supplying unit may supply a predetermined amount of moisture to the sub-chamber. The load supplying unit jets a certain amount of moisture to allow the sub-chamber to have a predetermined level of humidity.

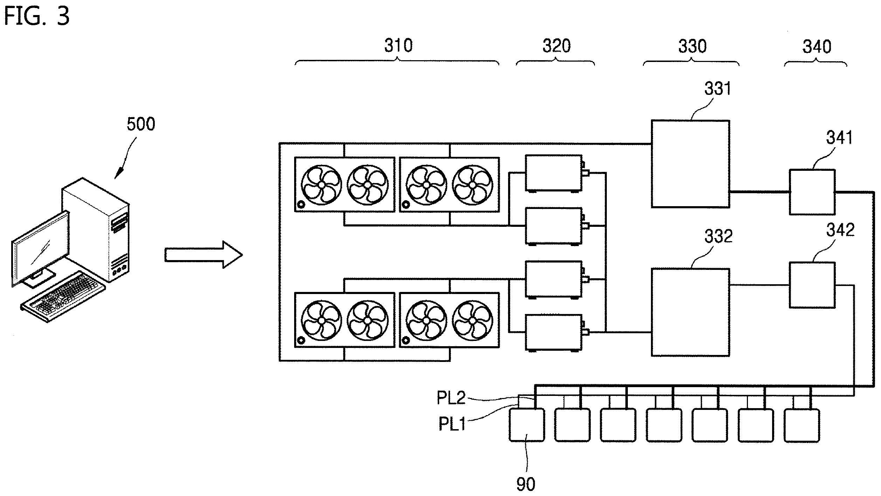

FIG. 3 shows a configuration of a heat source that supplies cool air and hot air to a sub-chamber according to an embodiment.

A device that generates load is designated as 310. In an embodiment, the device may generate heat to evaluate cooling capacity or may generate cool air or cool water to evaluate heating capacity. In an embodiment, the device includes a gas heat pump (GHP) system. The GHP system is a system air conditioner that uses an engine, and, in a facility, the GHP system is used as a source for cooling water. Water drained from the GHP system is used as a source for heating water. Accordingly, electricity consumption of the facility may be minimized.

An example system boiler is designated as 320, example heat storage space as 330, an example gas boiler as 331, and an example cool-water storage tank as 332. A pump is designated as 340, a pump for supplying hot water (or hot air) as 341, and a pump for supplying cool water (or cool air) as 342.

The pumps and each of the sub-chambers 90 may connect to pipe lines. Each sub-chamber 90 may connect to pipelines of the pumps such as PL1 and PL2.

In an embodiment, water is the heat source so that load supplied to indoor space may be exactly controlled in the structure of FIG. 3. Supplied water is provided to PL1 and PL2, and load may be supplied through a fan-coil unit that is installed in each sub-chamber. Load is measured on the basis of flow rates of supplied water and a difference in temperature of an inlet and outlet of the water, and controlled by adjusting flow rates of circulating water and temperature of an inlet of supplied water.

The load supplying unit that is placed in the pipeline of the sub-chamber may be controlled to supply cool water and hot water differently to each sub-chamber and to adjust the amount of cool water and hot water. Additionally, a mixing tank that mixes cool water and hot water is additionally placed in the pipeline of the sub-chamber to adjust the amount of cool water and hot water that is supplied to the sub-chamber.

A control device 500 may communicate with each of the elements in FIG. 3 in a wired or wireless manner, control each element, provide load that simulates climate in a specific area to each sub-chamber 90, and evaluate performance an air conditioner in the sub-chamber 90.

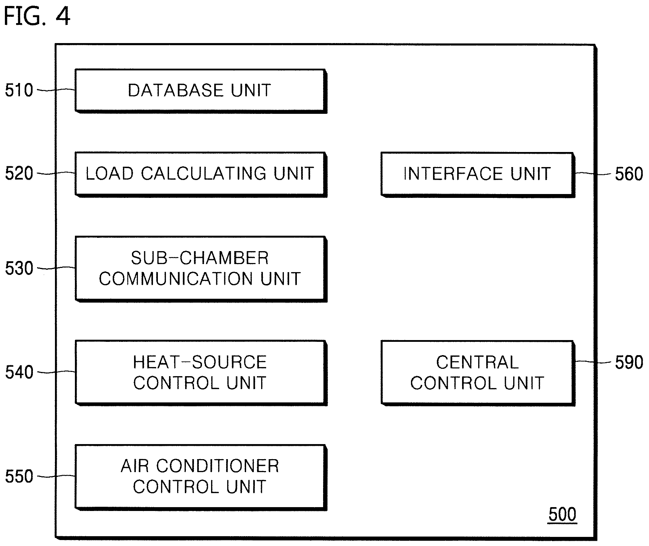

FIG. 4 shows a configuration of a control device that controls a sub-chamber according to an embodiment.

The control device 500 may control the devices 310, 320, 330, 340 in FIG. 3 and may provide control signals for controlling a supply of hot water and cool water to each sub-chamber. The control device 500 includes a database unit 510 that stores information on temperature or humidity in a country, a city, or an area to be simulated by means of supplied load.

The database unit 510 may store data on climate including temperature and humidity that are collected in an area that is distinguished geographically or administratively for a certain time period and may be ground data that are used to generate load to be supplied to the sub-chamber on the basis of the data on climate. Additionally, the control device 500 includes a load calculating unit 520 that calculates load to be supplied to one or more sub-chambers that will simulate climate of an area selected on the basis of information on temperature or humidity, which is stored in the database unit 510.

Further, the control device 500 transmits control signals to supply load to the sub-chamber, and controls a sub-chamber communication unit 530 that receives information on a state of the sub-chamber, and devices 310, 320, 330, 340 in relation to heat sources. Furthermore, the control device includes a heat-source control unit 540 that controls heat sources to supply cool air or hot air to the sub-chamber on the basis of the generated load.

The control device 500 controls an indoor unit that is placed in each of the sub-chambers, and includes an air-conditioner control unit 550 that confirms a state of the indoor unit and that measures energy consumption of the indoor unit in the sub-chamber supplied with load via control by the heat-source control unit 540 and the outdoor unit that is linked with the indoor unit to operate, and an interface unit 560 that outputs measured information. The air-conditioner control unit 550 may control the air conditioner (indoor unit and outdoor unit) in the sub-chamber in response to supplied load.

The control device 500 includes a central control unit 590 that controls the elements of the control device 500. The central control unit 590 is placed in the sub-chamber that is supplied with load simulating climate of a specific area using information supplied by the air-conditioner control unit 550, and evaluates performance of an air conditioner that performs air conditioning in terms of energy consumption, temperature change, and the like.

The interface unit 560 outputs information on the evaluated performance of the air conditioner. The interface unit 560 not only outputs information but also receives information. The user may input information required for simulation and evaluation such as load to be supplied to the sub-chamber, a selected city, and the like using the interface unit 560.

In summary, the sub-chamber communication unit 530 receives information on temperature and humidity of the sub-chamber, which are changed depending on operation of the air conditioner. The central control unit 590 calculates energy consumption of the air conditioner on the basis of results received by the sub-chamber communication unit 530. In another embodiment, the central control unit 590 may also confirm various factors that is required for evaluating performance of the air conditioner.

For instance, the central control unit may confirm temperature change for the first N minutes, the most efficient target temperature in climate, and the like. Temperature change for the first N minutes is useful to confirm operation of an air conditioner, which is required for providing desired-temperature air to the user as fast as possible in climate.

In FIG. 4, the control device 500 controls the sub-chamber and the heat source in FIG. 3 on the basis of information stored in the database unit 510 and supplies load that simulates climate of a specific area to the sub-chamber to evaluate performance of the air conditioner in the sub-chamber.

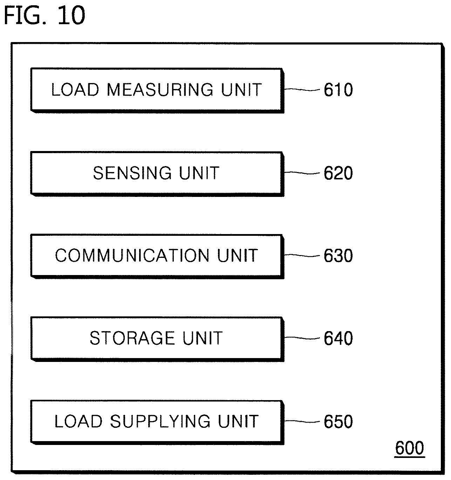

In FIG. 4, the sub-chamber communication unit 530 may receive a message that load was identically supplied to the sub-chamber in the past from a monitoring device (600 in FIG. 10) of the sub-chamber, information on temperature and humidity of the sub-chamber in response to the load, and control signals. This indicates that the same load is supplied to the same chamber in the process of measuring load. For instance, in an embodiment, load of a city, which was measured before, or load of another city that has identical weather conditions is input.

In this case, the central control unit 590 displays received information on the interface unit, and transmits a message of requesting the heat-source control unit 540 and the sub-chamber communication unit 530 to stop supplying load to the sub-chamber. Additionally, the central control unit 590 applies annual energy consumption itself, which was measured before in the sub-chamber at the same load.

An embodiment of the present disclosure is described with reference to FIGS. 3 and 4. With the configuration of FIG. 3, climate may be simulated on the basis of a certain time period (on a monthly basis, on an annual basis, on a seasonal basis, and the like) using information on changes in temperature and humidity in a specific country, a specific city, or a specific region, which is stored in the database unit 510 of the control device 500, to simulate cooling/heating load.

Annual operation performance of a system air conditioner may be evaluated after the system air conditioner automatically operates as in a field test that is carried out in the country or the region by means of sub-chambers the configuration of which may be set in various ways and by supplying outdoor conditions scheduled for actual climate or buildings and virtual load to the sub-chambers.

To this end, different products may be placed in each sub-chamber, the placed products are differently controlled to evaluate how much efficient are the products in a simulated region. Weather conditions in major regions to which products are applied may be reproduced via control by the control device 500. Accordingly, operation performance of an air conditioner may be evaluated on a monthly basis, on an annual basis, on a seasonal basis, and the like to upgrade products.

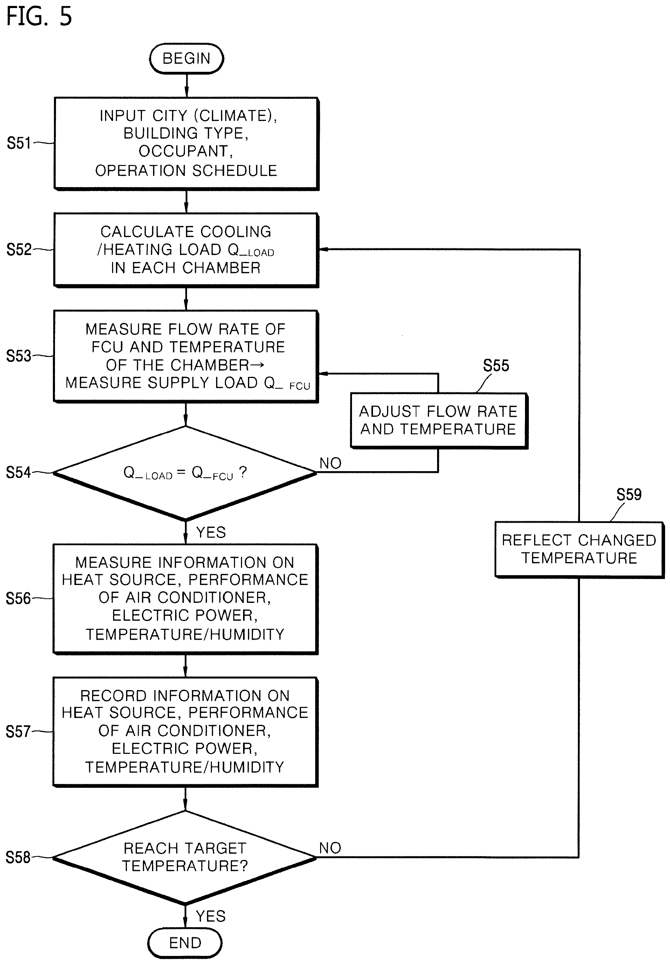

FIG. 5 shows a process during which a control device according to an embodiment operates. The control device 500 includes a computer, a laptop, a smart phone, and the like that may communicate and that may provide a predetermined interface. The interface unit 560 of the control device 500 inputs information on climate of a specific country or a specific city, the type of a building in which an air conditioner is disposed, the number of occupants in space, and an operation schedule (S51). The input information is required for exactly simulating operation of an air conditioner in the area. Some of the information may not be input, or another piece of information may be additionally input.

The load calculating unit 520 calculates cooling or heating load (Q__{load}) to be supplied to each sub-chamber to simulate the climate. The load calculating unit 520 controls the heat-source control unit 540, supplies cooling or heating load from a heat source, and measures information provided by the sub-chamber communication unit 5309, i.e., a flow rate in a fan-coil unit in the sub-chamber and temperature of the sub-chamber, and measures Q__{FCU} that is supplying load.

When cooling or heating load (Q__{load}) to be supplied to each sub-chamber is not the same as supplying load (Q__{FCU}) as a result of comparison between the cooling or heating load and the supplying load, the heat-source control unit 540 and the sub-chamber communication unit 530 of the control device 500 adjusts the flow rate to adjust temperature required for the cooling or heating load to reach the sub-chamber (S55).

The central control unit 590 confirms whether load having been supplied to the sub-chamber corresponds to climate of the selected region, and generates load that will be additionally supplied to the sub-chamber. In the first place, load to the sub-chamber is supplied to correspond to climate of a selected region. However, while load is supplied to the sub-chamber, heat loss may occur. Accordingly, the central control unit 590 creates an environment of the sub-chamber such that the environment is similar to climate of a selected region.

When cooling or heating load (Q__{load}) to be supplied to each sub-chamber is the same as supplying load (Q__{FCU}) as a result of comparison between the cooling or heating load and the supplying load in step 54, the control device 500 measures information on heat sources that operate in each sub-chamber, evaluate performance of an air conditioner, calculate electric consumption of the air conditioner, measures changes in temperature and humidity in the sub-chamber (S56) and stores the same (S57). In an embodiment, the control device 500 may continue to record or store load (Q_hp) of a heat pump, electric consumption of the heat pump, and temperature and humidity of the sub-chamber on a regular basis (S57).

Next, the control device confirms whether the sub-chamber currently reaches target temperature through cooling or heating (S58). When the sub-chamber does not reach the target temperature, the control device applies a changed temperature of the sub-chamber (S59) and carries out step 52 again. In an embodiment, the changed temperature denotes differences in temperature of cooling/heating load that is supplied to the sub-chamber for the first time, due to operation of an air conditioner.

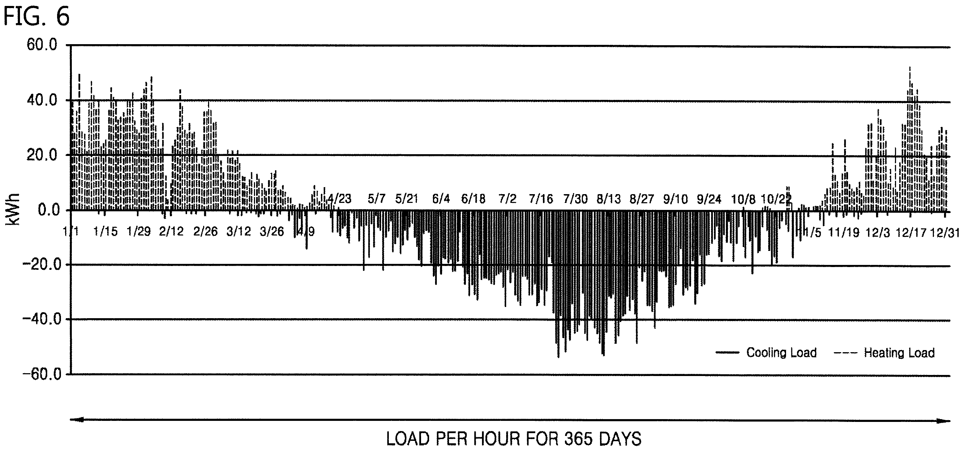

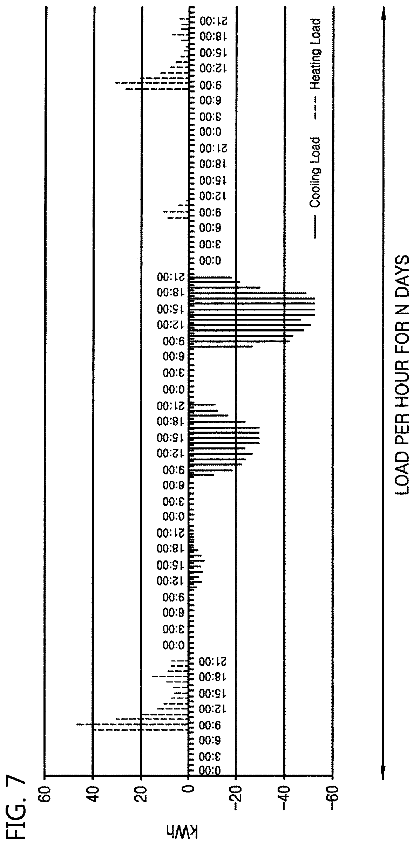

FIGS. 6 and 7 shows a load simulation and load model according to an embodiment.

In FIG. 6, the lateral axis indicates cooling load and heating load that are supplied for 365 days (Jan. 1 - Dec. 31) to simulate temperature in a specific region, and the longitudinal axis indicates magnitude of electric energy for removing the load. As in FIG. 6, cool air and hot air may be supplied such that climate is simulated throughout the year.

As in FIG. 7, load per hour may also be confirmed during a certain time period out of a one-year time period.

As in FIGS. 6 and 7, temperature in a building goes up and down as a result of the supply of cooling load and heating load during a certain time period. When heat sources are controlled in the same way that cooling/heating load is supplied in FIGS. 6 and 7, climate of a relevant region may be simulated, and the sub-chamber may have similar temperature and humidity to the relevant region. Additionally, an air conditioner in an indoor chamber operates to remove the load. In order to simulate the load, temperature and humidity may be controlled in a specific way, and electric energy that is consumed while an air conditioner removes load for a certain time period may be measured.

In this application, the simulation based on supplying load for a one-year time period on the basis of annual data is not proceeded. The sub-chamber is controlled to perform simulation in response to load in a meaningful section where actual energy consumption may be measured on the basis of the annual data through simulation. The meaningful section is a sub section of the one-year time period with annual data.

In an embodiment, the load calculating unit 520 may calculate load based on periods that are set in advance such that load is continuously supplied to the sub-chamber in response to climate over a certain time period in a specific region, which is generated as in FIG. 6. A certain time period denotes a time period during which an air conditioner is used for a certain time period or more when temperature goes above a certain level or falls below a certain level.

The heat-source control unit 540 may control heat sources such that load calculated by the load calculating unit 520 is supplied to the sub-chamber on the basis of periods that are set in advance. For instance, the periods may be five days in the summer or in the winter. In FIG. 7, load per hour for N days may be generated as an example.

The central control unit 590 may calculate energy consumption per hour over a certain time period of the air conditioner. Then the calculated energy consumption may be converted into annual energy consumption.

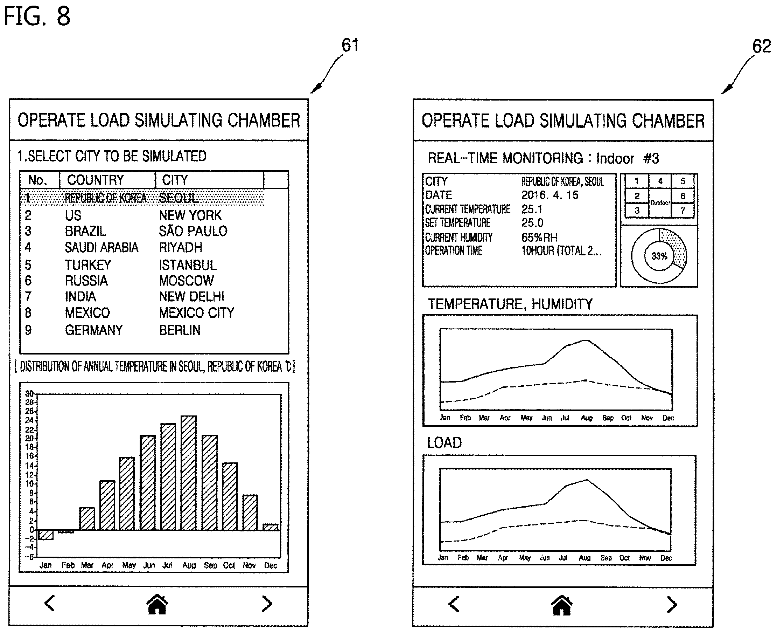

FIG. 8 shows a control device according to an embodiment that selects a city to which climate simulation is applied and that controls a chamber. Reference No. 61 indicates a screen that show a list of cities where load is simulated by the interface unit 560 of the control device 500. According to 61, when the user selects Seoul-South Korea, monthly temperature of Seoul is displayed. Additionally, when an instruction is given to operate a load simulation chamber, a specific sub-chamber (indoor chamber #3) sets temperature and humidity that correspond to a specific date and displays results of operation of an air conditioner, as indicated by Reference No. 62.

As in FIG. 8, the database unit 510 of the control device 500 stores an annual load profile for each country, each city or each region. When a specific city and a certain time period are selected, load may be supplied to a sub-chamber on the basis of the load profile of the region. Accordingly, annual electricity consumption of an indoor unit in the sub-chamber and an outdoor unit in relation to the indoor unit, and the like may be measured. Load may be simulated and supplied based on the type, thermal state, and the like of a building. Accordingly, annual electricity consumption of an air conditioner in any building in any place in the world may be measured.

A plurality of sub-chamber may be provided, and various states of load may be applied to a single city/region. Even in a single city, the interior materials of a building, the height of a building, the spatial property of a building the indoor temperature of which is controlled by an air conditioner, and the like may be applied such that load is supplied based on a variety of external conditions. On the basis of the external conditions, operation of an air conditioner may be controlled. Additionally, when a load profile is similar in different regions, a test for annual load may be carried out for a short time period on the basis of a group of regions with similar load.

In embodiments of the present disclosure, the control device 500 calculates heating load for simulating features of climate of a region in which an air conditioner is installed, and control device 500 supplies the calculated load to the sub-chamber for simulating features of clilamate. The control device 500 may measure an amount of energy that is consumed when an air conditioner in the sub-chamber removes supplied heat, may directly calculate annual energy consumption, and may confirm actual volume of energy savings on the basis of the calculated energy consumption.

In the past, energy consumption may be calculated based on a drop in indoor temperature when an air conditioner is turned on at certain temperature and on a certain humidity level. However, in this way, energy consumption may be calculated based on temporary temperature and humidity in a specific region. Thus, it may be difficult to calculate energy consumption of an air conditioner that operates based on features of climate which continues for a certain time period.

In embodiments, when heating load (cooling load) is continuously supplied and an air conditioner is controlled to operate on the basis of certain temporal flow in specific climate, energy consumption of the air conditioner may be calculated, and a way of operating the air conditioner which is adequate for the region may be found out.

Even when annual data on temperature and humidity are given, for increasing real time measurement efficiency, load may be supplied for a certain time period as in FIG. 7, and the control device may monitor operation of an air conditioner and the control device may calculate energy consumption of the air conditioner. For instance, 365 days may be categorized into five days with maximum cooling load and five days with maximum heating load on the basis of daily average outdoor temperature, and the rest of 355 days may be divided into four sections on the basis of daily average outdoor temperature. The sections are divided using temperature section.

A representative day may be selected for each section based on daily average outdoor temperature, daily solar irradiation, a daily temperature range, and a six-day simulation load may be created on the basis of cooling/heating load that is calculated according to time for a year, depending on use of the selected representative day and regions.

In FIG. 8, cities with similar climate may be selected and sub-chambers may be allocated to the cities. For instance, the central control unit 590 may select two or more cities with similar climate on the basis of data on climate and may allocate the two or more cities to each of the sub-chambers in the order of supplying hot air or cool air that is supplied by a heat source.

If Seoul and Istanbul have a similar temperature change and different humidity, out of the sub-chambers in FIG. 1, indoor chambers 1 to 3 are allocated to Seoul, and indoor chambers 5 to 7 are allocated to Istanbul, and load is supplied to these cub-chambers. In this process, moisture may be additionally supplied to the sub-chambers.

As described above, regions with a similar load profile may be grouped together and may be allocated sub-chambers. Additionally, sub-chambers that are positioned near heat sources may be set to simulate a city to be supplied with higher-temperature heating load or lower-temperature cooling load based on the order of moving heat sources.

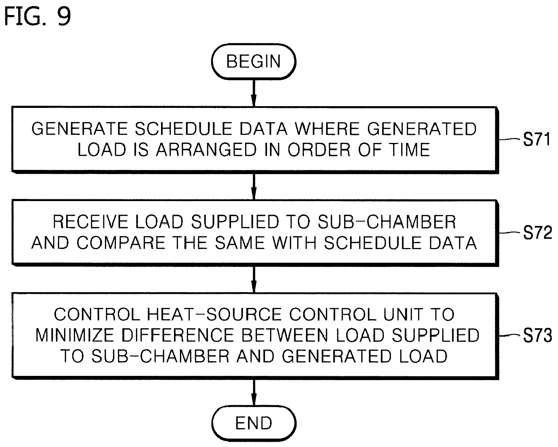

FIG. 9 shows a process during which a control device according to an embodiment controls load that is supplied to a sub-chamber.

The control device according to an embodiment simulates climate of a specific region and evaluates performance of an air conditioner on the basis of the simulated climate. Climate of a specific region is simulated for a certain time period continuously but not temporarily. To this end, the control device may monitor states of sub-chambers and may supply load adequate for the monitored states.

For instance, a central control unit 590 may generate data on schedules, in which loads calculated by a load calculating unit 520 are arranged according to time and, in particular, data on schedules, which are arranged according to time for a certain time period (e.g., five days in the summer, five days in the winter, and the like) from annual data.

In an embodiment, the data on schedules are load that is supplied to the sub-chamber to simulate climate in response to the climate. For instance, the data on schedules may include a flow rate of hot water that is supplied to the sub-chamber to simulate climate of an average temperature of 30 degrees Celsius for three hours.

A sub-chamber communication unit 530 receives information on load having been supplied to the sub-chamber. In an embodiment, the information may include a flow rate of load such as hot water, cool water, and the like that finally arrives in the sub-chamber.

The central control unit 590 compares load having been supplied to the sub-chamber with load having been generated from data on schedules of a selected region (S72). When a difference between the loads is at a certain level or above, the central control unit may send a message to a heat-source control unit 540 to control the heat-source control unit such that the heat-source control unit optionally supplies cool air or hot air to the sub-chamber so as to reduce the difference in the sub-chamber (S73).

There may be a difference between load (cooling load or heating load) having been supplied from heat sources according to schedules and load having been supplied directly to the sub-chamber. To reduce the difference, the central control unit 590 may instruct the heat-source control unit 540 to change load that is supplied by the heat sources to the sub-chamber.

FIG. 10 shows a configuration of a monitoring device that is provided in a sub-chamber according to an embodiment.

A load supplying unit 650, as described above, delivers heating load or cooling load that is supplied from heat sources to the sub-chamber.

A load measuring unit 610 is positioned in the sub-chamber and accumulates load having been supplied to the sub-chamber and measures the same. A sensing unit 620 senses temperature and humidity of the sub-chamber. A communication unit 630 receives control signals for controlling an air conditioner in the sub-chamber from the control device 500 and transmits the load having been measured by the load measuring unit 610 and the temperature and humidity having been sensed by the sensing unit 620, to the control device 500.

A storage unit 640 stores data on supplied load (a flow rate of supplied heating load or cooling load, temperature at the time of supplying heating load or cooling load, and the like), temperature and humidity, and control signals of an air conditioner. The information may be accumulated and stored. When load the same as the load that was supplied to the sub-chamber before is supplied to the sub-chamber, the storage unit may inform the control device 500 of this so as not to repeat duplicated measurements.

That is, when the load having been measured by the load measuring unit 610 is continuously the same as the load in the data stored in the storage unit 640, the communication unit 630 may transmit a message that says load which is being supplied currently and load which was supplied before are the same, information on temperature and humidity that was stored together with data on the same load, and control signals that were used to control an air conditioner before, to the control device. Accordingly, the control device 500 may confirm duplicated results and may change controls of the air conditioner or may stop a measurement.

The case in which the load having been measured by the load measuring unit 610 is continuously the same as the load in the data stored in the storage unit 640, denotes the case in which the same load is supplied as a result of comparison between physical properties of load that is supplied for a certain time period such as temperature, a flow rate, and the like of supplied cooling load or supplied heating load and stored information on load. In this case, the communication unit may inform the control device 500 that a measurement may be repeated.

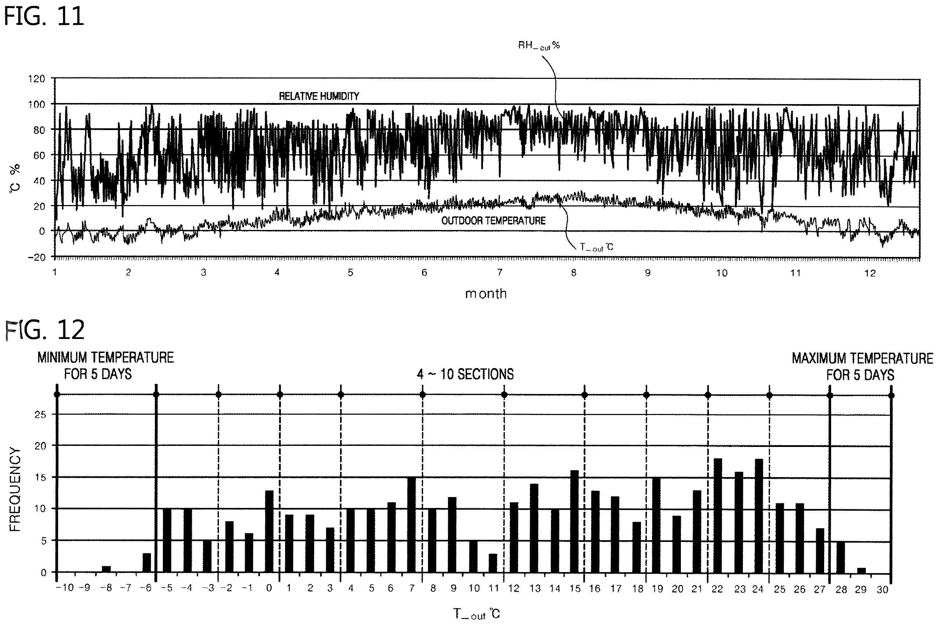

FIGS. 11 and 12 show a process of climate simulation in a compact manner using categorized annual data based on a predetermined time period.

FIG. 11 shows virtual load adequate for an experiment is presented after annual load for operating a chamber is calculated. Data on climate such as relative humidity and outdoor temperature may be used as the load. To calculate efficiency of annual operation, the annual data on climate in FIG. 11 are divided based on time periods, and a representative day may be selected from each of the time periods.

A representative day may be variously selected on the basis of features of climate. In an embodiment, day N with minimum daily average temperature and day M with maximum daily average temperature are selected. The rest days may be divided into the number (P) of sections, and a representative may be selected from each of the sections. Detailed description of this is provided in description of FIG. 12.

FIG. 12 shows frequency that is calculated based on daily average temperature by generating hourly data on climate from annual data on climate and results of the calculation of the frequency.

That is, five days with minimum daily average temperature and five days with maximum daily average temperature are selected. The rest days are divided into 4 to 10 sections, and a representative day is selected from each of the sections. In this case, each section may consist of 6 to 12 days. A day with daily average temperature, a daily temperature range, solar radiation similar to an average is selected as the representative day of each section.

The heat-source control unit may control heat sources to supply load that corresponds to the representative days having been selected from the annual data on climate having been divided based on time periods to the sub-chamber.

The central control unit may calculate energy consumption of an air conditioner in the sub-chamber and may calculate annual energy consumption based on a proportional relationship between load of data on climate and load of representative days.

That is, the sub-chamber operates on the basis of the representative days, and then the central control unit may calculate energy consumption based on differences in temperature in relation to the other days. In this process, the central control unit may additionally measure energy consumption in the sections with intermediate temperature.

In summary, when annual data on climate is generated, frequency is calculated on the basis of daily average temperature in a relevant time period. A day with maximum temperature and a day with minimum temperature are simulated based on the calculated frequency and a level of temperature, and climate is simulated in response to the representative day of each section. Additionally, energy consumption of an air conditioner may be confirmed in response to the simulated climate. In FIG. 11, load may also be supplied to the outdoor sub-chamber in FIG. 1 via supply of outdoor temperature.

When a minimum time period during which an experiment may be carried out is calculated based on the entire annual data on climate as in FIGS. 11 and 12, a test for evaluating performance may be finished fast.

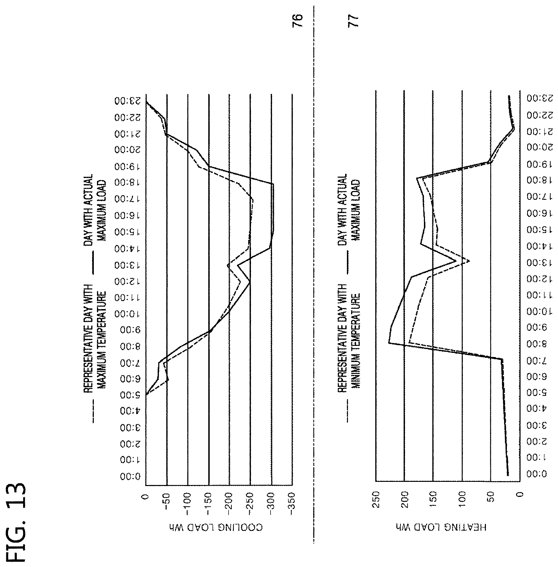

FIG. 13 shows results of reproducing annual load through analysis of a load pattern according to an embodiment.

As described above, annual loads may be compared using designated representative days from annual data on climate. That is, an annual load value (A) in which loads for 365 days are added up is obtained, that the annual load value(A) may be generated by actual simulation. And, another annual load value (C) is calculated using weighted average using the selected representative days. As a result, representativeness of load values (B) of the selected representative days may be confirmed by comparing the value (A) and (C).

In the case of cooling load 76 and heating load 77, results of comparison between data on load of a representative day with maximum load and a representative day with minimum load, and data on actual load of maximum load and minimum load are described as follows.

A day with minimum load has high solar radiation and high temperature, and load tends to be high from 2 p.m. to 6 p.m. A day with maximum load has low solar radiation and low temperature, and peak load tends to occur from 7 p.m. Reference numerals 76 and 77 in FIG. 13 show a similarity in patterns of results generated based on representative days and days with actual load.

Thus, as described above, representative days may be selected, and annual energy consumption may be calculated through simulation within a short time period. This means that performance of an air conditioner that operates in a region with the climate may be confirmed by selecting representative days and performing simulation within a short time period. In addition to energy consumption, the capacity of cooling or heating or an initial cooling/heating time period, and the like may be calculated.

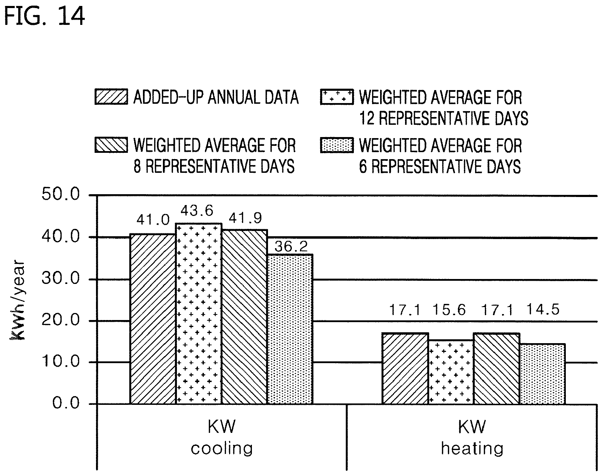

FIG. 14 shows accuracy of annual load on the basis of representative days according to an embodiment.

The left side of the view shows calculated energy consumption for cooling. When the calculated energy consumption is compared with added-up energy consumption (41.0) in data on annual energy consumption, a weighted average for 12 representative days, a weighted average for 8 representative days, and a weighted average for 6 representative days are respectively 43.6, 41.9, and 36.2.

The right side of the view shows calculated energy consumption for heating. When the calculated energy consumption is compared with added-up energy consumption (17.1) in data on annual energy consumption, a weighted average for 12 representative days, a weighted average for 8 representative days, and a weighted average for 6 representative days are respectively 15.6, 17.1, and 14.5. Thus, accuracy may improve because a weighted average for representative days such as 6, 8, and 12 days is closed to annual energy consumption.

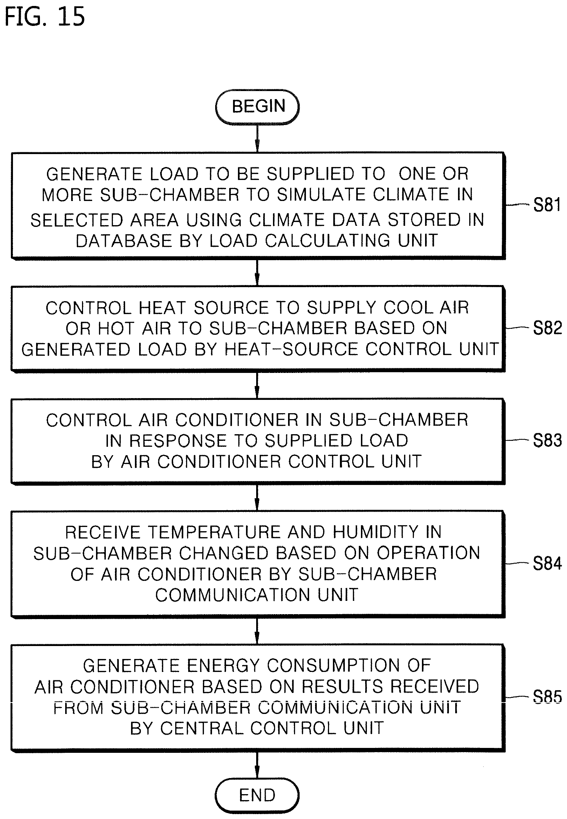

FIG. 15 shows a process during which performance of an air conditioner according to an embodiment is evaluated.

The load calculating unit 520 calculates load to be supplied to one or more sub-chambers that simulates climate of a selected region, using data on climate that is stored in the database unit 150 (S81). As in FIG. 8, a city is selected, and a chamber that simulates load is operated based on the selected city. The heat-source control unit 540 controls heat sources to supply cool air or hot air to the sub-chamber on the basis of the calculated load (S82).

An air-conditioner control unit 550 controls an air conditioner in the sub-chamber in response to the supplied load (S83).

The sub-chamber communication unit 530 receives information on temperature and humidity of the sub-chamber, which changes depending on operation of the air conditioner (S84). The central control unit 590 calculates energy consumption of the air conditioner on the basis of the information received from the sub-chamber communication unit 530 (S85).

Although in embodiments, all the elements that constitute the embodiments of the present disclosure are described as being coupled to one or as being coupled to one so as to operate, the disclosure is not limited to the embodiments. One or more of all the elements may be optionally coupled to operate within the scope of the present disclosure. Additionally, each of the elements may be implemented as single independent hardware, or some or all of the elements may be optionally combined and implemented as a computer program that includes a program module for performing some or all of the combined functions in single hardware or a plurality of hardware. Codes or segments that constitute the computer program may be readily inferred by one having ordinary skill in the art. The computer program is recorded on computer-readable media and read and executed by a computer to implement the embodiments. Storage media that store computer programs includes storage media magnetic recording media, optical recording media, and semiconductor recording devices. Additionally, the computer program that embodies the embodiments includes a program module that is transmitted in real time through an external device.

## Claims

1. A control device (500) that evaluates performance of an air conditioner based on climate simulation, comprising:
a database unit (510) configured to store data on climate including temperature and humidity that are collected in an area that is distinguished geographically or administratively for a certain time period ;
a load calculating unit (520) configured to calculate load to be supplied to one or more sub-chambers that will simulate climate of a selected region;
a heat-source control unit (540) configured to control heat sources to supply cool air or hot air to the sub-chamber on the basis of the calculated load;
an air-conditioner control unit (550) configured to control an air conditioner in the sub-chamber in response to the supplied load;
a sub-chamber communication unit (530) configured to receive information on temperature and humidity of the sub-chamber; and
a central control unit (590) configured to calculate energy consumption of the air conditioner on the basis of results received by the sub-chamber communication unit.

2. The control device of claim 1, wherein the central control unit (590) is configured to confirm whether load having been supplied to the sub-chamber corresponds to climate of the selected region and configured to generate load that will be additionally supplied to the sub-chamber.

3. The control device of claim 1 or 2, wherein the load calculating unit (520) is configured to calculate load based on periods that are set in advance such that load is continuously supplied to the sub-chamber in response to climate over a certain time period in the region,
the heat-source control unit (540) is configured to control heat sources such that load having been calculated by the load calculating unit is supplied to the sub-chamber on the basis of periods that are set in advance,
the central control unit (590) is configured to calculate energy consumption per hour of the air conditioner over the certain time period.

4. The control device of claim 1, 2, or 3, wherein the central control unit (590) is configured to select two or more cities with similar climate on the basis of data on climate and configured to allocate the two or more cities to each of the sub-chambers in the order of supplying hot air or cool air that is supplied by the heat sources.

5. The control device of anyone of claims 1 to 4, wherein the central control unit (590) is configured to generate data on schedules, in which loads having been calculated by the load calculating unit are arranged according to time,
the sub-chamber communication unit (530) is configured to receive information on load having been supplied to the sub-chamber,
when a difference between load having been supplied to the sub-chamber and load having been generated from data on schedules of the selected region is at a certain level or above, the central control unit is configured to instruct the heat-source control unit to optionally supply cool air or hot air to the sub-chamber so as to reduce the difference.

6. The control device of anyone of claims 1 to 5, wherein the central control unit (590) is configured to calculate load, using annual data on climate of a region to be applied to the sub-chamber, configured to categorize the annual data on climate based on time periods, and configured to select a representative day on the basis of the categorized annual data on climate,
the heat-source control unit (540) is configured to control heat sources to supply load that corresponds to the representative days having been selected from the categorized annual data on climate to the sub-chamber,
the central control unit (590) is configured to calculate energy consumption of an air conditioner in the sub-chamber and configured to calculate annual energy consumption based on a proportional relationship between load of the data on climate and load of the representative days.

7. A monitoring device (600), comprising:
a load supplying unit (650) configured to deliver heating load or cooling load that is supplied from heat sources to a sub-chamber;
a load measuring unit (610) placed in the sub-chamber and configured to accumulate and measure load having been supplied to the sub-chamber;
a sensing unit (620) configured to sense temperature and humidity of the sub-chamber;
a communication unit (630) configured to receive control signals for controlling an air conditioner in the sub-chamber from a control device and configured to transmits information on the measured load and sensed temperature and humidity to the control device; and
a storage unit (640) configured to store data on supplied load, information on temperature and humidity of the sub-chamber, and control signals of the air conditioner.

8. A monitoring device of claim 7, wherein when load having been measured by the load measuring unit is continuously the same as the load in the data stored in the storage unit (640), the communication unit (630) is configured to transmit a message that says load having been measured by the load measuring unit is the same as the load in the data stored in the storage unit (640), information on temperature and humidity that was stored together with data on the same load, and control signals to the control device.

9. A method of evaluating performance of an air conditioner based on climate simulation by a control device (500), comprising:
calculating load to be supplied to one or more sub-chambers that simulates climate of a selected region, using data on climate that is stored in a database unit by a load calculating unit (520);
controlling heat sources to supply cool air or hot air to a sub-chamber on the basis of the calculated load by a heat-source control unit (540);
controlling an air conditioner in the sub-chamber in response to the supplied load by an air-conditioner control unit (550);
receiving information on temperature and humidity of the sub-chamber, which are changed depending operation of the air conditioner by a sub-chamber communication unit (530); and
calculating energy consumption of the air conditioner on the basis of results received by the sub-chamber communication unit (530) by a central control unit (590).

10. The method of claim 9, further comprising:
confirming whether load having been supplied to the sub-chamber corresponds to climate of the selected region by the central control unit (590); and
generating load that will be additionally supplied to the sub-chamber by the central control unit (590).

11. The method of claim 9 or 10, comprising:
caluclating load based on periods that are set in advance such that load is continuously supplied to the sub-chamber in response to climate over a certain time period in the region by the load calculating unit (520);
controlling heat sources by the heat-source control unit such that load having been calculated by the load calculating unit (520) is supplied to the sub-chamber on the basis of periods that are set in advance; and
calculating energy consumption per hour of the air conditioner over the certain time period by the central control unit (590).

12. The method of claim 9, 10, or 11, further comprising: selecting two or more cities with similar climate on the basis of data on climate and allocating the two or more cities to each of the sub-chambers in the order of supplying hot air or cool air that is supplied by the heat sources by the central control unit (590).

13. The method of anyone of claims 9 to 12, comprising:
generating data on schedules, in which loads having been calculated by the load calculating unit are accumulated according to time by the central control unit (590);
receiving information on load having been supplied to the sub-chamber by the sub-chamber communication unit (530); and
when a difference between load having been supplied to the sub-chamber and load having been generated from data on schedules of the selected region is at a certain level or above, instructing the heat-source control unit to optionally supply cool air or hot air to the sub-chamber so as to reduce the difference by the central control unit(590).
